(19) Europäisches Patentamt
European Patent Office
Office européen des brevets

(11) **EP 2 082 851 A1**

(12) **EUROPEAN PATENT APPLICATION**

(43) Date of publication:
**29.07.2009 Bulletin 2009/31**

(51) Int Cl.:
**B25J 9/16** (2006.01)

(21) Application number: **08156349.6**

(22) Date of filing: **16.05.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS**<br><br>(71) Applicant: **ABB Research Ltd.**<br>**8050 Zürich (CH)** | (72) Inventors:<br>• **Gunnar, Johan**<br>**0592 Oslo (NO)**<br>• **Wäppling, Daniel**<br>**721 68 Västerås (SE)**<br><br>(74) Representative: **Reyier, Ann-Mari et al**<br>**Bjerkéns Patentbyra KB**<br>**Box 128**<br>**721 05 Västeras (SE)** |

(54) **An industrial robot capable of supervising its environmental impact and a method thereof**

(57) The present invention relates to an industrial robot capable of supervising its environmental impact, wherein the robot comprises: recording means (5,7) configured to record the power consumption of the robot, and computing means (8) configured to determine whether the energy consumption has increased more than a permitted value, and to initiate an action if the energy consumption has increased more than the permitted value.

Fig. 1

**Description**

FIELD OF THE INVENTION

The present invention relates to an industrial robot capable of supervising its environmental impact. The invention also relates to a method for supervising the environmental impact of an industrial robot.

PRIOR ART

Industrial robots are today used throughout almost all branches of industrial applications. As an asset among others, the robots contribute to the total environment impact of the plant. The environmental impact exerted by robot system is not constant during the robot life cycle. The impact on the environment will increase during the robot life cycle, since different components of the robot will age and wear down during the life cycle of the robot. The robots are subjected to services with regular service intervals during its life time. When the service has been carried out, the power consumption of the robot is reduced. However, some types of service, such as change of oil, also have an impact on the environment. Traditionally, robot systems have no functionality to estimate the impact on the environment of its usage.

OBJECTS AND SUMMARY OF THE INVENTION

One object of the present invention is to provide a method for supervising the environmental impact of an industrial robot.
This object is achieved by a method as defined in claim 1.
Such a method comprises: continuously recording the power consumption of the robot, determining whether the energy consumption has increased more than a permitted value, and initiating an action if the energy consumption has increased more than the permitted value.
The power consumption of the robot is the largest environmental impact of the robot. Thus, according to the invention, the power consumption of the robot is recorded and if the energy consumption has increased more than a permitted value an action is initiated. For example, it is possible to give warnings to the user if the power consumption, and accordingly the environmental impact, increases. The user can then determine what actions to be taken in order to decrease the environmental impact of, such as carrying out service on the robot or replacing the robot with a new robot. The power consumption is, for example, recorded as a function of time. The power consumption of the robot can be determined based on power measurements, or on measurement of any other quantity related to the power consumption, such as the current. Although it is possible to calculate the power consumption based on motor references, such as desired motor torque, calculated by the control unit of the robot, it is preferable to use measured values, since they include information on an increase of the power consumption due to wear of the robot, and possibly faulty components of the robot causing an increase in the power consumption.
Further, the recorded power consumption data can be used to identify potential improvements as to how the robot is used and propose changes in the installation that will decrease the environmental impact.
In this context the wordings power consumption and energy consumption are used synonymously.
When the robot starts to wear, the power consumption and accordingly the environmental impact will increase. Making a service will reduce the power consumption to a normal level. However, making a service will have an environmental impact in itself. According to an embodiment of the invention, the method further comprises storing the environmental impact of different types of service actions for the robot, and said actions include: determining the reason for the increased power consumption by means of an automatic diagnostic method, automatically determining one or more suitable service actions for the robot based on the determined reason for the increased power consumption, and calculating with respect to the environmental impact an optimal service interval for the robot based on the stored power consumption, the environmental impact of the determined service actions, and an optimization criterion. This embodiment makes it possible to automatically calculate an optimal service interval from an environmental point of view.
The power consumption of the robot is recorded and the recorded data is used to determine an optimal service interval with respect to the environmental impact. Also the environmental impact of the service is considered when determining the optimal service interval. The types of services are, for example, oil change or replacement of different components of the robot by spare parts. Diagnostic methods which today are used for condition-based maintenance in the robot system can be used to supervise environmental impact of the robot system.
According to an embodiment of the invention, the method further comprises calculating with respect to the environmental impact an optimal point in time for carrying out the next service for the robot based on the calculated optimal service interval. This embodiment makes it possible to have varying time intervals for the services, each time interval being optimized with regard to the environmental impact.
According to an embodiment of the invention, the action includes providing a warning to the robot user when the environmental impact of the robot has increased above the permitted value. This embodiment makes it possible to give a warning to the user when a significant change of the environmental impact has occurred.

According to an embodiment of the invention, the method comprises calculating the present environmental impact of the robot based on the power consumption of the robot and making the calculated present environmental impact accessible for a robot user. For example, the environmental impact is presented in the form of $CO_2$ equivalents as a function of time. The environmental impact is, for example, calculated by making an LCA (Life cycle Analyze) analysis of the recorded power consumption. The present environmental impact can also be made available to an overhead control system via a suitable interface. The warning mentioned above can be given via the same interface and/or via a graphical interface of the robot.

According to an embodiment of the invention, the method comprises continuously displaying the power consumption of the robot. A robot comprises a manipulator and a control unit controlling the motions of the manipulator. Preferably, the total power consumption of the robot is determined and displayed, such as the power consumption of the manipulator as well as the robot controller. Suitably, the power consumption as a function of time is displayed to the user. This embodiment makes it possible for the user to supervise the power consumption of the robot and to compare the power consumption of different robots.

The method according to the invention, as defined in the appended set of method claims, is suitable for execution by a computer program having instructions corresponding to the steps in the inventive method when run on a processor unit. Preferably, the method is carried out by the robot controller.

Another object of the present invention is to provide an industrial robot capable of supervising its environmental impact.

This object is achieved by a robot as defined in claim 8.

BRIEF DESCRIPTION OF THE DRAWINGS

The invention will now be explained more closely by the description of different embodiments of the invention and with reference to the appended figures.

Fig. 1     shows an example of an industrial robot according to an embodiment of the invention.

Fig. 2     shows an example of the power consumption of a robot during its lifetime.

Fig. 3     shows an example of the environmental impact as a function of time in dependence on the length of the service interval.

DETAILED DESCRIPTION OF PREFERRED EMBODIMENTS OF THE INVENTION

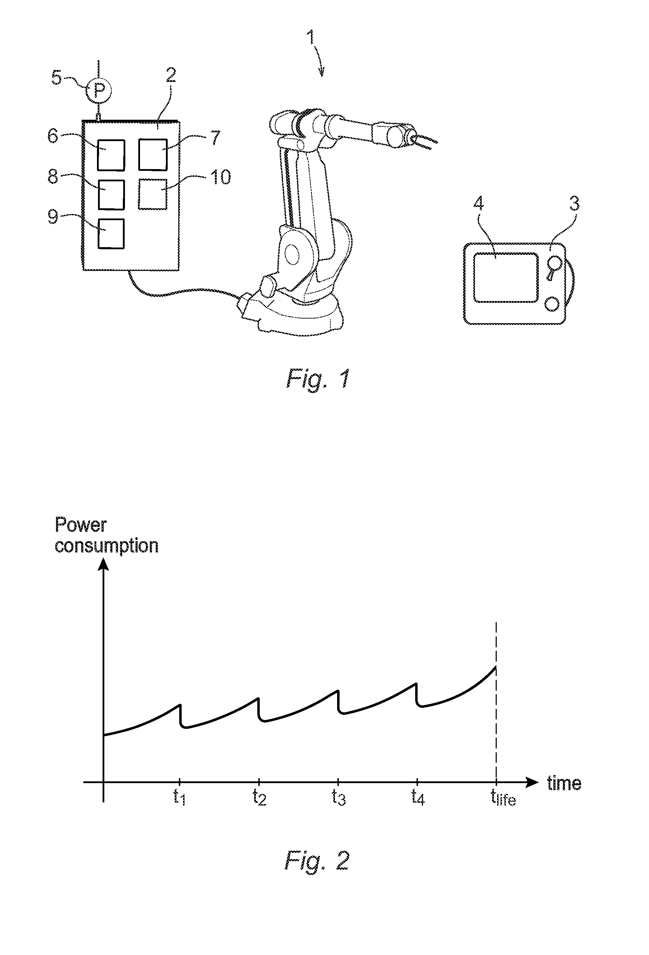

Figure 1 shows an example of an industrial robot according to an embodiment of the invention. The robot includes a manipulator 1 and a control unit 2 for controlling the motions of the manipulator. The control unit includes at least one processor, memory storage, communication units, drive units and other hardware and software necessary for controlling the robot. Motors of the manipulator are supplied with power from the drives of the robot controller. The robot further includes a portable operating device 3, hereafter called a TPU, for teaching and manually operating the robot. The TPU is in communication with the control unit, ether wirelessly or through a cable. The TPU is provided with a display unit 4. The control unit 2 can also be in communication with a head control system, not shown in the figure.

In this embodiment of the invention the power supply to the robot is measured by means of a power meter 5. The power meter 5 is arranged on the incoming power cable to the robot. If the robot is supplied with from power from more than one power cable, each cable can be provided with a power meter. In this embodiment of the invention, the resulting power measurements are supplied to the robot controller. The power measurements are stored and further processed by the robot controller. Alternatively, the resulting power measurements can be supplied to, stored, and further processed by an external computer, for example the head control system. Alternatively, the power is measured at any other place in the robot, for example at the drives, or another parameter, such as the current, is measured and the power consumption is calculated based on the measured quantity. The power consumption can be calculated continuously in the robot system during production and can, for example, be different kinds of measures related to the energy consumption to move the robot arm, such as energy consumed during a time period, energy consumed during one production cycle, or parts of the total energy consumed, such as friction energy. Several of these measures are used today, but not with the aim to give measures of environmental impact, but for fault diagnostics and motion control.

The robot controller, or alternatively the external computer, is provided with computing means configured to determine whether the energy consumption has increased more than a permitted value, and to initiate an action if the energy consumption has increased more than the permitted value. The computing means includes suitable hardware and software for determining whether the energy consumption has increased more than a permitted value. The energy consumed by the robot during a certain time period is repeatably determined. The determined energy consumption is stored, and the energy consumed by the robot during a present time period is compared with the energy consumed by the robot during a previous time period, preferably the preceding time period, and based on the result of the comparison it is determined whether the total energy consumption has increased more than the permitted value. The default value for the permitted value of the power increase is, for example, set by the robot supplier, but can possibly be changed by the robot user.

In an alternative embodiment of the invention, the present environmental impact of the robot is continuously calculated based on the power consumption of the robot, and the calculated environmental impact is made available to a robot user. For example, the robot user can access this information by the TPU. Information on the present environmental impact can be transferred to the head control unit. In an alternative embodiment of the invention, the power consumption of the robot is continuously displayed, for example on the TPU. Suitably, the power consumption per unit of time is presented. This embodiment makes it possible for the user to compare the power consumption for a plurality of robots.

If the energy consumption has increased more than the permitted value, the robot controller initiates one or more actions. One possible action is to provide a warning to the robot user when the environmental impact of the robot has increased above the permitted value. This warning is, for example, displayed on the TPU. The warning can also be transferred to the head control system.

In this example the control unit 2 includes a data processing unit 6, such as a CPU, a first data storage 7 for storing the measured power consumption of the robot, a computing module 8 configured to determine whether the energy consumption has increased more than a permitted value, and to initiate an action if the energy consumption has increased more than the permitted value, and second data storage 9 for storing the environmental impact of different types of service actions for the robot.

The control unit 2 further includes diagnostic means 10 for determining the reason for the increased power consumption upon detecting that the energy consumption has increased more than the permitted value, and for determining one or more suitable service actions for the robot based on the determined reason for the increased power consumption. The computing module 8 is further configured to calculate with respect to the environmental impact an optimal service interval for the robot based on the stored power consumption, the environmental impact of the determined service actions, and an optimization criterion.

Figure 2 shows an example of the power consumption of a robot during its lifetime. When the robot starts to wear, the power consumption, and accordingly the environmental impact, will increase. Service is made on the robot at the points in time denoted $t_1$, $t_2$, $t_3$, and $t_4$. As seen from the figure, making a service on the robot reduces the power consumption. In practice, the power consumtion after a service occasion is somewhat higher than the power consumption after the last service occasion, and accordingly the power consumption during the life-time of the robot increases.

However, making a service will have an environmental impact in itself.

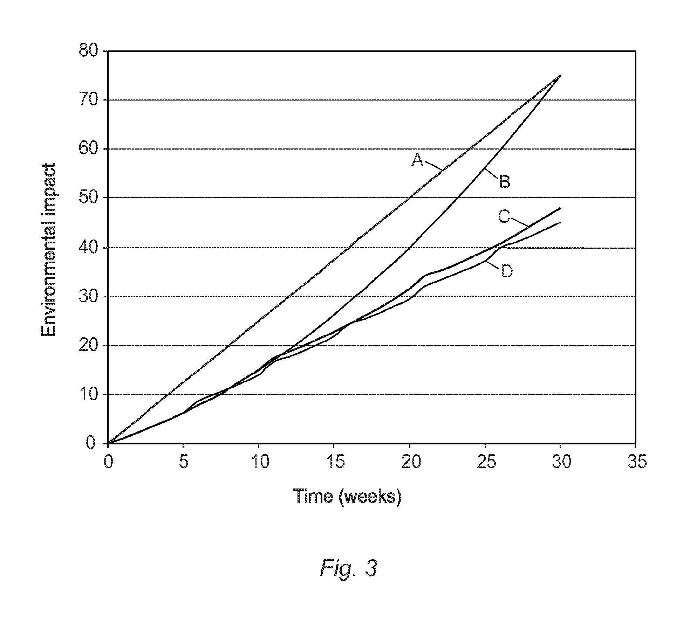

Figure 3 shows an example of the environmental impact as a function of time in dependence on the length of the service intervals. Curve A shows the environmental impact if service is made on the robot with a service interval of one week. Curve B shows the environmental impact if service is made on the robot with a service interval of 30 weeks. Curve C shows the environmental impact if service is made on the robot with a service interval of 10 weeks. Curve D shows the environmental impact if service is made on the robot with a service interval of 5 weeks. When a service is made, the power consumption is decreased, but the environmental impact due to the service is increased. In total, the environmental impact at the point in time of the service will increase, but soon after the service the environmental impact will be lower. During the entire life time of the robot the environmental impact will increase. As seen from the figure, the environmental impact is lowest if the service is made with a service interval of 5 weeks.

According to an embodiment of the invention, an optimal service interval is calculated for the robot. The environmental impact of different types of service actions, such as change of oil, for the robot is estimated and stored beforehand, for example, in the control unit. When it is determined that the power consumption has increased more than the permitted value, the following steps are carried out: the reason for the increased power consumption is determined by means of an automatic diagnostic method, one or more suitable service actions for the robot is automatically determined based on the determined reason for the increased power consumption, and an optimal service interval for the robot with respect to the environmental impact is calculated based on the stored power consumption, the stored environmental impact of the determined service actions, and an optimization criterion. Those steps are, for example, carried out by software stored in the control unit and run on hardware of the control unit. In the prior art numerous diagnostic methods are known, which can be used for determining the reason for an increased power consumption. The aim of the known diagnostic methods is fault diagnostics for the robot and not to reduce the environmental impact of the robot. Examples of diagnostic methods which can be used to determine suitable service to be done on the robot is disclosed in European patent application No. 06125771 (fault diagnostics based on friction, play and noise), European patent application No. 06125079 06125771 (fault diagnostics based on the deviation between reference values and measured values for driving components of the robot), and European patent application No. 07102279 (remote diagnostic system for robots).

When an optimal service interval has been calculated, it is possible to calculate an optimal point in time for carrying out the next service for the robot with respect to the environmental impact based on the calculated optimal service interval. The next service for the robot with respect to the environmental impact is presented to the user or at least made available to the user.

In the following, one example of a method for calculating an optimal service interval for the robot is described.

Using the recorded data of energy consumption, a function W(t) (power consumption) is fitted to the experimental data. Making a service will eliminate the effect of wear on the power consumption, hence the power consumption after a service at a time T is equal to W(t-T). The environmental impact is given by the consumed energy multiplied by some constant k reflecting what kind of source is used to generate the energy (water, coal, wind, nuclear etc) and the number and types of service actions. The total environmental impact $EI_{tot}$ can be written as:

$$EI_{tot} = \sum_{i=0}^{N-1} \int_{T_i}^{T_{i+1}} k * W(t - T_i)dt + N * EI_{service} \qquad (1)$$

Where $T_{i+1}$ - $T_i$ is the service interval,

N is equal to the lifetime $T_{life}$ of the robot divided by the service interval $T_{i+1}$ - $T_i$,

$EI_{service}$ is the environmental impact of the service performed.

K is a constant reflecting what kind of source is used to generate the energy. The higher value on k the more is the impact on the environment. For simplicity it is assumed that the power consumption of the robot after a service occasion always is the same, and not increasing as in reality.

Formula 1 is derived by the following:

$$\int_{T_i}^{T_{i+1}} k * W(t - T_i)dt = \left[t - T_i + 0.05(t - T_i)^2\right]_{T_i}^{T_{i+1}} = T_{i+1} - T_i + 0.05 * (T_{i+1} - T_i)^2 =$$

$$\frac{T_{life}}{N} + 0.05 * \frac{T_{life}^2}{N^2}$$

$$\sum_{i=0}^{N-1} \left(\frac{T_{life}}{N} + 0.05 * \frac{T_{life}^2}{N^2}\right) = T_{life} + 0.05 * \frac{T_{life}^2}{N}$$

The optimal solution can then be found by minimizing $EI_{tot}$ with respect to N. The optimization criterion can be written:

$$d\ EI_{tot}/dN = 0 \qquad (2)$$

This approach is exemplified using the example shown in figure 3. A function W(t) is fitted to the measured power data. Figure 3 is based on a case in which W(t) = 1 + 0.1t. The curve B is the integral of W(t) = 1 + 0.1t.

In this example it is assumed that:

k = 1

$EI_{service}$ =1,5 (This is an estimate of the environmental impact of a standard service performed at regular intervals)

$T_{life}$ = 30 weeks

$$EI_{tot} = T_{life} + 0.05 * T_{life}^2/N + EI_{service} * N \qquad (3)$$

$dEI_{tot}/dt = 0$ gives an optimal service interval of 5,5 weeks.

Knowing the point in time for the last service occasion, it is easy to calculate the point in time for the next service occasion based on the calculated optimal service interval.

**Claims**

1. A method for supervising the environmental impact of an industrial robot (1), wherein the method comprises:

   continuously recording the power consumption of the robot,
   determining whether the energy consumption has increased more than a permitted value, and
   initiating an action if the energy consumption has increased more than the permitted value.

2. The method according to any of the previous claims, wherein the method further comprises storing the environmental impact of different types of service actions for the robot, and said action includes:

   determining the reason for the increased power consumption by means of an automatic diagnostic method,
   automatically determining one or more suitable service actions for the robot based on the determined reason for the increased power consumption, and
   calculating with respect to the environmental impact an optimal service interval for the robot based on the stored power consumption, the environmental impact of the determined service actions, and an optimization criterion.

3. The method according to claim 2, wherein the method further comprises calculating with respect to the environmental impact an optimal point in time for carrying out the next service for the robot based on the calculated optimal service interval.

4. The method according to any of the previous claims, wherein said action includes providing a warning to the robot user when the environmental impact of the robot has increased above the permitted value.

5. The method according to any of the previous claims, wherein the method comprises calculating the present environmental impact of the robot based on the power consumption of the robot and making the calculated present environmental impact accessible for a robot user.

6. The method according to any of the previous claims, wherein the method comprises continuously displaying the power consumption of the robot.

7. The method according to any of the previous claims, wherein the method comprises:

   repeatably determining the energy consumed by the robot during a certain time period,
   storing the determined energy consumption, and
   comparing the energy consumed by the robot during the present time period with the energy consumed by the robot during a previous time period, and based thereon determining whether the total energy consumption has increased more than the permitted value.

8. An industrial robot capable of supervising its environmental impact, wherein the robot comprises:

   recording means (5,7) configured to record the power consumption of the robot, and
   computing means (8) configured to determine whether the energy consumption has increased more than a permitted value, and to initiate an action if the energy consumption has increased more than the permitted value.

9. The robot according to claim 8, wherein the robot comprises:

   a data storage (9) for storing the environmental impact of different types of service actions for the robot, and
   diagnostic means (10) for determining the reason for the increased power consumption upon detecting that the energy consumption has increased more than the permitted value, and for determining one or more suitable service actions for the robot based on the determined reason for the increased power consumption, and said computing means (8) is configured to calculate with respect to the environmental impact an optimal service interval for the robot based on the stored power consumption, the environmental impact of the determined service actions, and an optimization criterion.

10. The robot according to according to claim 8 or 9, wherein said computing means (8) is configured to provide a warning when the environmental impact of the robot has increased above the permitted value.

11. The robot according to according to any of claims 8-10, wherein said computing means (8) is configured to calculate the present environmental impact of the robot based on the recorded power consumption of the robot and the robot is configured to make the calculated present environmental impact accessible for a robot user.

12. The robot according to any of claims 8-11, wherein the robot is configured to for continuously display the power consumption of the robot.

Fig. 1

Fig. 2

*Fig. 3*

EP 2 082 851 A1

EUROPEAN SEARCH REPORT

Application Number

EP 08 15 6349

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 269 373 A (UNIMATION INC [US]) 1 June 1988 (1988-06-01) * the whole document * | 1,4-8, 10-12 | INV. B25J9/16 |
| X | US 2003/171851 A1 (BRICKFIELD PETER J [US] ET AL) 11 September 2003 (2003-09-11) * the whole document * | 1-12 | |
| X | EP 0 842 006 A (TRI WAY MACHINE LTD [US]) 20 May 1998 (1998-05-20) * the whole document * | 1,6-8,12 | |
| A | EP 0 632 353 A (ELBIT LTD [IL]) 4 January 1995 (1995-01-04) * the whole document * | 1-12 | |
| A | US 2005/143876 A1 (TANASE RENTO [JP]) 30 June 2005 (2005-06-30) * the whole document * | 1-12 | |

TECHNICAL FIELDS SEARCHED (IPC)

G05B

The present search report has been drawn up for all claims

| Place of search | Date of completion of the search | Examiner |
|---|---|---|
| The Hague | 19 November 2008 | Barriuso Poy, Alex |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

10

## ANNEX TO THE EUROPEAN SEARCH REPORT
## ON EUROPEAN PATENT APPLICATION NO.

EP 08 15 6349

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2008

| Patent document cited in search report | | | Publication date | Patent family member(s) | | | Publication date |
|---|---|---|---|---|---|---|---|
| EP 0269373 | A | | 01-06-1988 | NONE | | | |
| US 2003171851 | A1 | | 11-09-2003 | AU | 2003253581 | A1 | 03-11-2003 |
| | | | | CA | 2478667 | A1 | 30-10-2003 |
| | | | | CN | 1692317 | A | 02-11-2005 |
| | | | | MX | PA04008754 | A | 20-09-2005 |
| | | | | WO | 03090038 | A2 | 30-10-2003 |
| | | | | US | 2008177423 | A1 | 24-07-2008 |
| | | | | US | 2005038571 | A1 | 17-02-2005 |
| | | | | US | 2005043862 | A1 | 24-02-2005 |
| EP 0842006 | A | | 20-05-1998 | AU | 5024496 | A | 05-03-1997 |
| | | | | DE | 69621935 | D1 | 25-07-2002 |
| | | | | WO | 9705982 | A1 | 20-02-1997 |
| EP 0632353 | A | | 04-01-1995 | IL | 110095 | A | 18-03-1997 |
| | | | | JP | 7167688 | A | 04-07-1995 |
| | | | | US | 5406502 | A | 11-04-1995 |
| US 2005143876 | A1 | | 30-06-2005 | JP | 4124035 | B2 | 23-07-2008 |
| | | | | JP | 2005016443 | A | 20-01-2005 |

**EP 2 082 851 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 06125771 A
- EP 06125079 A

- EP 07102279 A